# EUROPÄISCHE PATENTSCHRIFT

(11) **EP 2 049 248 B1**
(45) Veröffentlichungstag und Bekanntmachung des Hinweises auf die Patenterteilung: **24.11.2010**
(21) Anmeldenummer: 07786669.7
(22) Anmeldetag: 13.08.2007
(51) Int. Cl.: B01J 20/32, C09K 5/04, F28D 20/00, F28F 23/00

(54) **ADSORBENS UND DESSEN VERWENDUNG IN WÄRMESPEICHERN UND WÄRMEPUMPEN BZW. KÄLTEMASCHINEN**
ADSORBER AND ITS USE IN HEAT ACCUMULATORS AND HEAT PUMPS, OR REFRIGERATORS
ADSORBANT ET SON UTILISATION DANS DES ACCUMULATEURS DE CHALEUR ET DES POMPES À CHALEUR, RESPECTIVEMENT DES MACHINES FRIGORIFIQUES

(30) Priorität: 11.08.2006 DE 102006037528; 18.09.2006 DE 102006043672
(43) Veröffentlichungstag der Anmeldung: 22.04.2009
(73) Patentinhaber: Fraunhofer-Gesellschaft zur Förderung der angewandten Forschung e.V., 80686 München (DE); Technische Universität Dortmund, 44221 Dortmund (DE)
(72) Erfinder: BROVCHENKO, Ivan, 44892 Bochum (DE); OLEINIKOVA, Alla, 44892 Bochum (DE); GEIGER, Alfons, 44267 Dortmund (DE); SCHMIDT, Ferdinand, 79106 Freiburg (DE)
(74) Vertreter: Pfenning, Meinig & Partner GbR
(86) Internationale Anmeldenummer: PCT/EP2007/007148
(87) Internationale Veröffentlichungsnummer: WO 2008/017516

(56) Entgegenhaltungen:
- CA-A- 1 025 765
- US-A1- 2003 153 457

## Beschreibung

Die Erfindung betrifft ein Adsorbens mit einer porösen Trägerstruktur, deren Porenwände mit einem Material beschichtet sind, das ein temperaturinduziertes, reversibles Umschalten der Benetzungseigenschaften von hydrophilem zu hydrophobem Verhalten zeigt, wobei die Hydrophobizität bei steigender Temperatur zunimmt. Verwendung findet das erfindungsgemäße Adsorbens in Wärmespeichern und Wärmepumpen sowie in Kältemaschinen.

Adsorptionswärmespeicher bieten die Möglichkeit einer nahezu verlustfreien Speicherung von Wärme, insbesondere im Temperaturbereich bis 250 °C, über lange Zeiträume. Ein Bedarf an solchen Langzeit-Wärmespeichern besteht insbesondere im Zusammenhang mit der solarthermischen Gebäudeheizung in Erdregionen mit starker jahreszeitlicher Schwankung der solaren Einstrahlung, d.h. in allen äquatorfernen Regionen. Hier fällt im Jahresverlauf das größte Angebot der Solarwärme aus thermischen Kollektoren in den Sommer, der Heizwärmebedarf jedoch überwiegend in den Winter. Im Sinne des Aufbaus einer nachhaltigen Energieversorgung, die verstärkt auf erneuerbare Energiequellen setzt, ist die saisonale Wärmespeicherung für die Gebäudeheizung wünschenswert und ist Voraussetzung zur Erreichung hoher solarer Deckungsanteile bei der solarthermischen Gebäudeheizung.

Die Wärmespeicherung im Temperaturbereich bis 250 °C ist auch für viele andere Anwendungen ein wichtiges Thema. So besteht z.B. bei der dezentralen Stromerzeugung in Anlagen mit Kraft-Wärme-Kopplung (KWK) typischerweise das Problem unterschiedlicher zeitlicher Bedarfsprofile für Strom und Wärme. Um diese Anlagen stromgeführt betreiben zu können und die erzeugte Wärme nutzen zu können, muss diese Wärme zwischengespeichert werden, bis sie gebraucht wird. Dazu werden Wärmespeicher mit hoher Energiedichte und hoher Effizienz, d.h. geringen Wärmeverlusten, benötigt.

Eine aus dem Stand der Technik bekannte Variante basiert darauf, dass die Temperaturabhängigkeit der Wasserabsorption in porösen Materialien zur Wärmespeicherung genutzt wird. Allerdings stellt hierbei neben ungeeigneten Druckbedingungen ein flacher Temperaturverlauf der Adsorptionsisobaren eine wesentliche Einschränkung für die technische Anwendung dieser Variante dar. Ursache hierfür ist das Verschmieren des Kapillarkondensations/Kapillarevaporations-Übergangs, d.h. eines Flüssigkeit-Gas-Phasenübergangs innerhalb der Poren, aufgrund breiter Porengrößenverteilung und einer hohen Heterogenität der Porenoberfläche. Dies führt dazu, dass die Kapillarkondensation bzw. Kapillarevaporation bei Temperaturen und Drücken stattfindet, die stark von der Porengröße abhängen.

Für die Anwendung in Adsorptionswärmepumpen und - kältemaschinen bestehen vergleichbare Anforderungen an das Adsorbens wie für Wärmespeicher. Auch hier ist gegenüber aus dem Stand der Technik bekannten Adsorbentien ein größerer Beladungsumsatz in einem engen Temperaturbereich (bei konstantem Druck) wünschenswert.

In der US 2003/0153457 Al ist ein Adsorbens offenbart, das ein adsorbierendes Material und eine poröse Ummantelung aufweist, wobei die Ummantelung Polymere enthält.

Aufgabe der vorliegenden Erfindung war es daher, Adsorbentien bereitzustellen, die diese aus dem Stand der Technik bekannten Nachteile nicht aufweisen und einen Temperatur-induzierten Flüssigkeit-Gas-Phasenübergang in einem engen Temperatur- und Druckintervall ermöglichen. Für die Anwendung in Adsorptionswärmepumpen und -kältemaschinen sollen zudem Adsorbentien bereitgestellt werden, die bauliche Vereinfachungen der Maschinen ermöglichen und es insbesondere erlauben, den Kondensator als separates Bauteil einzusparen.

Diese Aufgabe wird durch das Adsorbens mit den Merkmalen des Anspruchs 1 gelöst. In den Ansprüchen 14 und 17 werden erfindungsgemäße Verwendungen genannt. Die weiteren abhängigen Ansprüche zeigen vorteilhafte Weiterbildungen auf.

Erfindungsgemäß wird ein Adsorbens bereitgestellt, das eine poröse Trägerstruktur aufweist, wobei die Porenwände mit mindestens einem Polymer, Oligomer und/oder Blends hiervon beschichtet sind. Die Beschichtung ermöglicht dabei ein Temperatur-induziertes, reversibles Umschalten der Benetzungseigenschaften von hydrophilem zu hydrophobem Verhalten, wobei die Hydrophobizität bei steigender Temperatur zunimmt.

Die Möglichkeit, die Hydrophilie bzw. Hydrophobie der Porenwände zu verändern, eröffnet einen Weg für eine kontrollierte Kondensation und Verdampfung von Wasser in porösen Materialien. Veränderte Benetzungseigenschaften der Porenwände können durch chemische Behandlung, durch Bestrahlung und durch Temperaturvariation erreicht werden. Letzteres kann durch Belegung der Oberflächen mit einem dünnen Film der erfindungsgemäßen Beschichtung erreicht werden, die mit zunehmender Temperatur einen reversiblen Übergang zeigt, der die Eigenschaften der Oberfläche von hydrophil nach hydrophob umschaltet.

Das erfindungsgemäße Adsorbens zeigt eine sprunghafte Veränderung des Kontaktwinkels eines darauf liegenden Wassertropfens, wenn eine definierte Temperatur überschritten wird. Wird ein Kontaktwinkel von etwa 90° erreicht, so erfolgt die Umschaltung von Kapillarkondensation zu Kapillarevaporation.

Das erfindungsgemäße Adsorbens zeichnet sich gegenüber den aus dem Stand der Technik bekannten Materialien insbesondere dadurch aus, dass der Flüssig-Gas-Phasenübergang in den Poren trotz der unterschiedlichen Porengröße in einem engen Temperatur- und Druckintervall synchron abläuft.

Das erfindungsgemäße Adsorbens ermöglicht eine effiziente Wärmeaufnahme und -abgabe in einem schmalen, technisch vorteilhaften Temperatur- und Druckbereich durch Ausnutzung des Flüssig-Gas-Phasenübergangs in hinreichend harten porösen Materialien. Die Lage des sprunghaften Kapillarkondensation/-evaporations-Übergangs bezüglich Temperatur und Druck kann durch eine entsprechende Wahl des Beschichtungsmaterials eingestellt werden.

Durch die schaltbare Oberfläche der Porenwände bei Erhöhung der Temperatur von hydrophilem zu hydrophobem Verhalten wird die Entleerung der Poren bereits bei geringerer Ausheiztemperatur und damit geringerem Temperaturschub erreicht. Auch hier kann die Temperatur der Entleerung durch die Wahl des Beschichtungsmaterials eingestellt werden.

Ein weiterer wichtiger Vorteil ist es, dass der Wärmespeichereffekt bei dem erfindungsgemäßen Adsorbens im Wesentlichen auf der Kondensationsenthalpie und nicht auf der Wechselwirkungsenergie mit den Porenwänden beruht.

In einer bevorzugten Ausführungsform der vorliegenden Erfindung enthält die Beschichtung der Porenwände mindestens ein LCST -Polymer. Dieses ist besonders bevorzugt ausgewählt aus der Gruppe bestehend aus N-substituierten Poly(meth)acrylamiden, Poly(N-Vinylcaprolactam), Polyalkylenoxiden, Polyalkylenglykolen, Poly(vinylalkylether), Hydroxyalkylcellulosen sowie deren Copolymeren oder Blends.

In einer weiteren bevorzugten Ausführungsform enthält die Beschichtung mindestens ein denaturierbares Biopolymer, insbesondere aus der Gruppe der Peptide.

Das Beschichtungsmaterial kann so gewählt werden, dass die Hydrophobizität stetig mit steigender Temperatur zunimmt. Ebenso ist es aber auch möglich, dass die Hydrophobizität in einem engen Temperaturbereich sprunghaft ansteigt.

Die Schichtdicke der Beschichtung hängt stark von dem verwendeten Beschichtungsmaterial ab. Die Schichtdicke wird dabei durch die verwendeten Polymer- bzw. Oligomerketten bestimmt. Durch Hydratation kann sich die Schichtdicke um etwa den Faktor 2 vergrößern. Die minimale Schichtdicke liegt dabei im trockenen, d.h. wasserfreien Zustand bei 15 Å (= 15·10⁻¹⁰ m), z.B. in dem Fall, wenn kleine Peptide als Beschichtungsmaterial eingesetzt werden. Die maximale Schichtdicke wird durch die Porengröße des verwendeten Trägermaterials limitiert. Die obere Schichtdicke liegt somit bei 200 Å (= 200 · 10⁻¹⁰ m).

Die Trägerstruktur kann vorzugsweise ausgewählt sein aus der Gruppe poröser Silicagläser oder poröser Kohlenstoffe, wie z.B. Aktivkohle. Die mittlere Porengröße des Trägermaterials sollte in einem Bereich sein, der ein ausreichendes Porenvolumen nach der Beschichtung ermöglicht. Daher sollte die mittlere Porengröße mindestens 50 Å (= 50·10⁻¹⁰ m) betragen. Dies schließt nicht aus, dass auch Poren mit kleineren Durchmessern in der Trägerstruktur vorliegen, die dann aber nicht für eine Wassereinlagerung zur Verfügung stehen. Eine obere Grenze der mittleren Porengröße liegt bei 2000 Å (= 2000 · 10⁻¹⁰ m), da oberhalb dieser Porengröße aufgrund der Metastabilität Probleme bei der Verdampfung auftreten, so dass der Verdampfungsprozess zu viel Zeit in Anspruch nimmt.

Die Porosität der Trägerstruktur sollte möglichst hoch sein. Für gängige Trägerstrukturen, wie Silicagläser oder Aktivkohlen, liegt diese in einem Bereich von 0,2 bis 0,6 cm³/g.

Die spezifische Oberfläche der Trägerstruktur liegt vorzugsweise in einem Bereich von 100 bis 1000 m²/g.

Verwendung findet das erfindungsgemäße.Adsorbens in Wärmespeichern, insbesondere zur Adsorption von Wasser.

Ebenso findet das erfindungsgemäße Adsorbens Verwendung in Wärmepumpen und Kältemaschinen. In diesen Anwendungen bietet das erfindungsgemäße Adsorbens den großen Vorteil, dass oberhalb einer Schwellentemperatur das Adsorbens hydrophob ist und somit kein Temperaturschub für die Desorption mehr erforderlich ist. Die Kondensation kann dann direkt an der Adsorbensoberfläche erfolgen und die Kondensationswärme dem Desorptionsprozess direkt wieder zugeführt werden, so dass kein Kondensator als separates Bauteil mehr erforderlich ist. Dadurch wird die Komplexität der Anlage reduziert und es werden einfachere hydraulische Verschaltungen sowie eine vereinfachte Betriebsführung möglich (insbesondere in Anlagen mit mehreren Adsorbern).

Anhand der nachfolgenden Figuren soll der erfindungsgemäße Gegenstand näher erläutert werden, ohne diesen auf die hier gezeigten speziellen Ausführungsformen einschränken zu wollen.
Fig. 1 zeigt anhand eines Diagramms die Abhängigkeit des Dampfdrucks von Wasser von der Temperatur bei aus dem Stand der Technik bekannten Adsorbentien.
Fig. 2 zeigt anhand eines Diagramms die Abhängigkeit des Dampfdrucks von Wasser von der Temperatur von erfindungsgemäßen Adsorbentien.
Fig. 3 zeigt ein µ-T-Phasendiagramm von Bulk-Wasser und Wasser in zylindrischen Poren.
Fig. 4 zeigt ein Diagramm, das einen Gas-Flüssig-Phasenübergang in zwei Poren unterschiedlicher Hydrophilie zeigt.

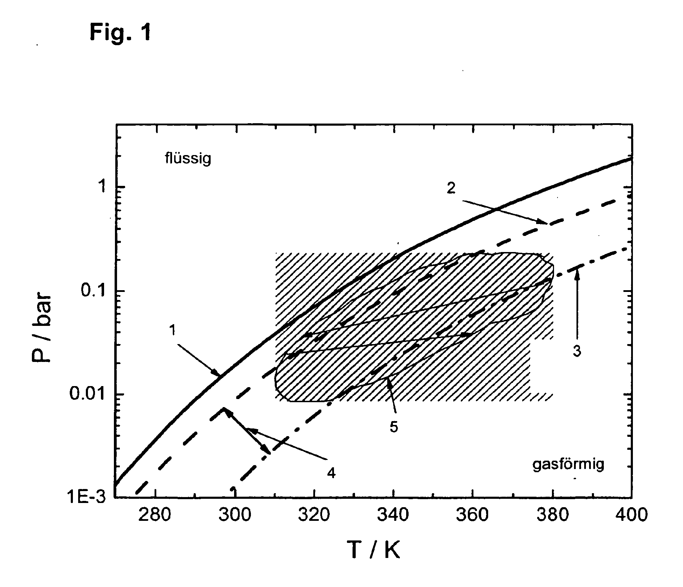

Anhand von Fig. 1 wird der Dampfdruck von Wasser mit aus dem Stand der Technik bekannten porösen Materialien in Abhängigkeit von der Temperatur gezeigt. Hierbei bedeuten:
- 1: Bulk-Wasser
- 2: Wasser in großen Poren
- 3: Wasser in kleinen Poren
- 4: Porengrößenverteilung
- 5: Arbeitsbereich

Die Materialien besitzen hierbei eine temperaturunabhängige Hydrophilie der Porenwände. Die Poren füllen sich mit der Flüssigkeit, wenn diese im Gleichgewicht mit gesättigtem Dampf von Bulk-Wasser steht. Ein Trocknen der Poren durch Erwärmen, d.h. eine Bewegung im Diagramm von links nach rechts, kann nur bei Drücken unterhalb des Dampfdrucks der Bulk-Flüssigkeit erfolgen. Dies ist durch den gestrichelten Bereich im Diagramm verdeutlicht. Der Flüssigkeits-Dampf-Übergang ist hier wegen der breiten Porengrößenverteilung in realen Materialien stark verbreitert. Dies begrenzt die Anwendbarkeit poröser Materialien für die Wärmespeicherung.

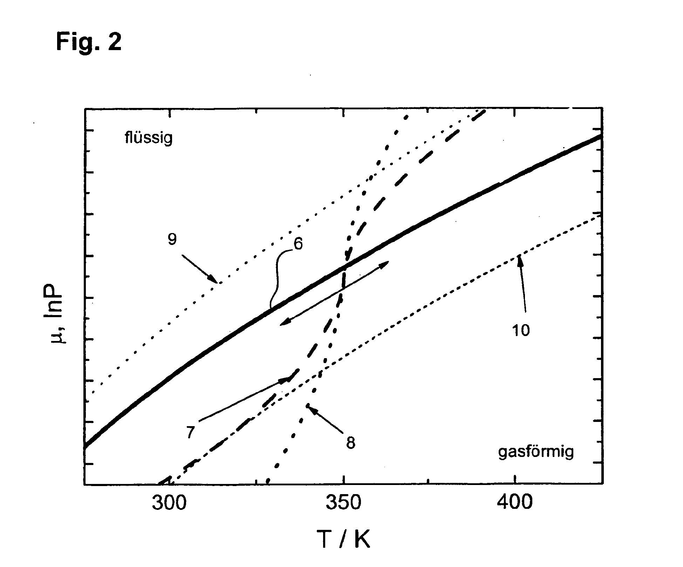

In Fig. 2 ist ein zu Fig. 1 entsprechendes Diagramm für ein erfindungsgemäßes Adsorbens dargestellt. Hierin bedeutet:
- 6: Bulk-Wasser
- 7: Große Poren
- 8: Kleine Poren
- 9: Große, hydrophobe Poren
- 10: Große, hydrophile Poren

Dieses zeigt eine mit steigender Temperatur zunehmende Hydrophobie. In Fig. 2 ist dies daran zu erkennen, dass das chemische Potential des Wassers in den Poren des Adsorbens mit der hydrophilen/hydrophoben Beschichtung ab einer bestimmten Temperatur höher als das chemische Potential von flüssigem Wasser (als Bulk-Phase) bei derselben Temperatur ist. Die Wassermoleküle bilden dann bevorzugt Wassertropfen außerhalb des Adsorbens und verbleiben nicht in den Poren des Adsorbens. Die Poren sind bei tiefen Temperaturen und Sättigungsdampfdruck der Bulk-Flüssigkeit gefüllt, bis die Wechselwirkung zwischen Wasser und Porenwand bei Erwärmung einen Schwellenwert überschreitet. Im vorliegenden Diagramm ist dieser Schwellenwert bei etwa 350 K (∼77 °C). der Schwellenwert U_{C} der Potentialtiefe liegt bei -1 kcal/mol, was einer Oberflächenhydrophobizität zwischen derjenigen von Kohlenstoff und Kohlenwasserstoffen entspricht. Eine Leerung der Poren kann durch Erwärmung bei Sättigungsdampfdruck oder darunter erreicht werden, d.h. im vorliegenden Fall durch eine Erwärmung dieser 350 K (∼77 °C). Wenn U den Schwellenwert erreicht, setzt nahezu gleichzeitig in Poren aller Größen ein scharfer Flüssig-Gas-Phasenübergang ein.

Das in Fig. 2 dargestellte und zuvor beschriebene Phänomen bedeutet für die Anwendung des Adsorbens in Kältemaschinen, dass der aus dem Adsorbens austretende Dampf noch innerhalb des Adsorbers kondensieren würde. Wenn dies schon an der Oberfläche des Adsorbens, das als Pellet oder als Schicht z.B. auf einer Wärmetauscher-Oberfläche vorliegen kann, geschieht, wird die Kondensationswärme dem Adsorbens direkt wieder zugeführt, d.h. die Wärmemenge, die zur Desorption über den Wärmetauscher zugeführt werden muss, wird stark reduziert. Bei Adsorbentien mit Hydrophil/Hydrophob-Übergang wird so der zur Desorption benötigte Temperaturschub 0, d.h. Desorption und Kondensation erfolgen auf demselben Temperatur-Niveau, wodurch die Kondensationswärme direkt zur Desorption genutzt werden kann. Bei der Absorption bei niedriger Temperatur ist trotzdem ein gewisser Temperaturhub nutzbar, da das Adsorbens bei niedriger Temperatur hydrophil ist und somit zu einer Dampfdruckabsenkung gegenüber Bulk-Wasser führt. Im Hinblick auf die Energiebilanz einer Kältemaschine unter Verwendung des erfindungsgemäßen Adsorbens ist festzustellen, dass als Wärmestrom auf dem mittleren Temperatur-Niveau, d.h. aus dem System heraus, nur noch die Adsorptionswärme existiert. Diese Wärmemenge muss der Summe aus Verdampfungswärme und Desorptionswärme, die ins System hineinfließen, entsprechen. Da die Desorptionswärme aufgrund des Verbleibs der Kondensationswärme im Adsorber sehr gering wird, lässt sich so ein sehr hoher Wirkungsgrad (COP) erreichen. Dieser liegt deutlich näher am COP des Carnot-Prozesses als für aus dem Stand der Technik bekannte Adsorbentien.

Im Hinblick auf Kältemaschinen sind auch die Wärmemengen, die bei einem isosteren Aufheizen und Abkühlen aufgewendet werden müssen bzw. frei werden, von großer Bedeutung. Beim isosteren Aufheizen erfolgt ein Phasenübergang des erfindungsgemäßen Adsorbens, d.h. die Molekülketten kollabieren und verknollen sich. Dies führt zu einer hohen effektiven Wärmekapazität des Adsorbens, d.h. die "sensible" Wärme, die einen Phasenwechselenthalpie, aber keine sorptive Enthalpie aufweist, ist deutlich größer als üblich. Dies führt dazu, dass eine Kältemaschine mit dem erfindungsgemäßen Adsorbens auf einen Kondensator verzichten kann, so dass an den Rückkühler nur noch die Adsorptionswärme abgeführt werden muss. Dies bringt den Vorteil mit sich, dass die hydraulische Verschaltung und die Betriebsführung einer Kältemaschine so deutlich vereinfacht werden kann.

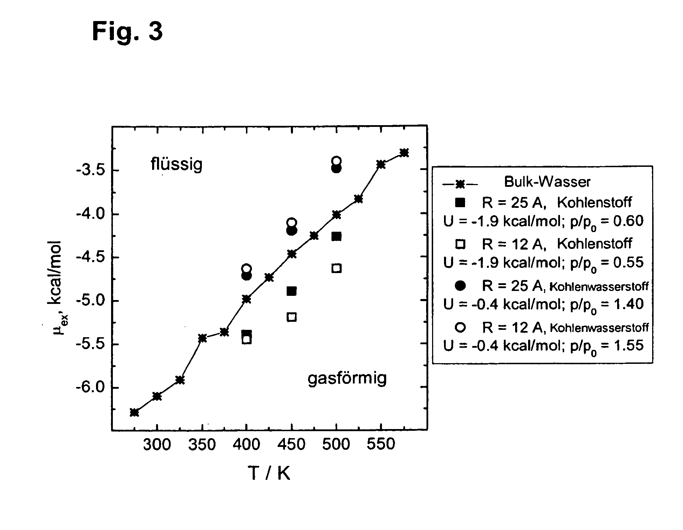

In Fig. 3 ist ein µ-T-Phasendiagramm von Bulk-Wasser und Wasser in zylindrischen Poren, die aus Simulationsrechnungen erhalten wurden, dargestellt.

Im Gleichgewicht mit Bulk-Wasser bei Sättigungsdampfruck füllen sich die kohlenstoffartigen Poren, dargestellt durch die Punkte unterhalb der durchgezogenen Linie mit Flüssigkeit, wohingegen die hydrophoben Poren, dargestellt durch die Punkte oberhalb der durchgezogenen Linie mit Wasserdampf gefüllt sind. Die durchgezogene Linie gibt das chemische Potential von Bulk-Wasser an der Gleichgewichtslinie an. Die Punkte zeigen das chemische Potential des Wassers bei Flüssigkeits-Gas-Phasengleichgewicht in verschiedenen Zylinderporen.

Im Gleichgewicht mit Wasserdampf beim Sättigungsdampfdruck der Bulk-Flüssigkeit sind die kohlenstoffartigen Poren (U=-1,9 kcal/mol) mit Flüssigkeit gefüllt, die Kohlenwasserstoff-Poren (U=-0,4 kcal/mol) mit Wasserdampf. Wenn die Hydrophobizität der Porenwände mit der Temperatur zunimmt, verdampft die Flüssigkeit in den Poren durch einen Phasenübergang. Dies geschieht, wenn sich die Tiefe des Wasser-Wand-Wechselwirkungspotentials U von -1,9 auf -0,4 kcal/mol ändert.

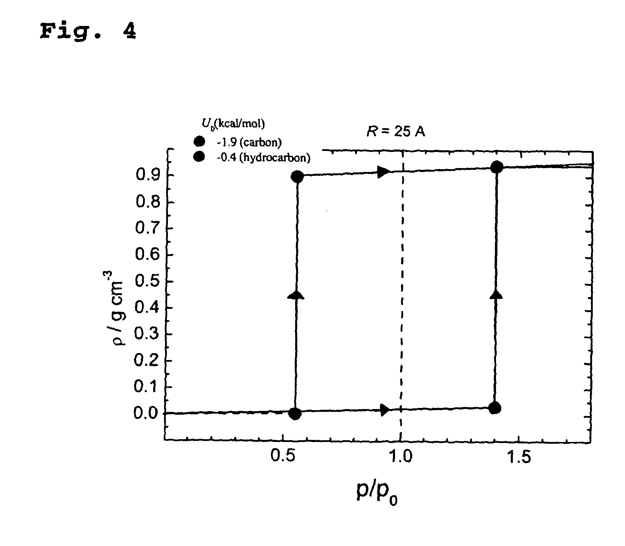

Fig. 4 zeigt anhand eines Diagramms den Gas-Flüssig-Phasenübergang in zwei Poren unterschiedlicher Hydrophilie. Die hier dargestellten Linien bezeichnen die Adsorptionsisothermen. Der Übergang geschieht bei p = p₀, wenn das chemische Potential U₀ etwa -1,0 kcal/mol beträgt.

Die Figuren 3 und 4 verdeutlichen folgendes Phänomen. Wenn die Hydrophilie der Porenwände mit zunehmender Temperatur abnimmt und die Wechselwirkungsstärke mit den Wassermolekülen unter -1 kcal/mol fällt, sollte eine Kapillarevaporation in den Poren aller Größen simultan einsetzen. Ein solches synchrones Verhalten kann durch die Beschichtung der Porenwände mit temperaturschaltbaren Materialien erreicht werden. Solche Beschichtungsmaterialien können unter den Substanzen gefunden werden, die in wässriger Lösung ein Temperatur-induziertes Entmischungsverhalten zeigen, da diese auch bei der Verwendung als Beschichtungsmaterial einen temperatur-induzierten Anstieg der Hydrophobizität erwarten lassen, was z.B. an einem temperaturabhängigen Kontaktwinkel von Wassertropfen auf planaren beschichteten Oberflächen erkennbar ist. Ein Material, das in diesem Zusammenhang besonders geeignet ist, ist PNiPAM. Aber auch verschiedene Blockcopolymere sind hierfür bevorzugt einsetzbar.

Hinsichtlich einer Kältemaschine kann der geringe Temperaturhub ein Problem darstellen. In Fig. 4 ist der Beladungsverlauf über den relativen Dampfdruck für eine hydrophile und eine hydrophobe Zylinderpore gezeigt. Die hydrophobe Pore wird erst bei einem relativen Dampfdruck größer 1 beladen, was zur Kapillar-Verdampfung und Kondensation auf der Oberfläche des Adsorbens führt. Die hydrophile Pore wird in diesem Beispiel in Fig. 4 bei einem relativen Dampfdruck von ca. 0,55 beladen. Dies entspricht einem maximalen Temperaturhub von 10 bis 13 K (°C). Um möglichst große Temperaturhübe realisieren zu können, wird die hydrophil/hydrophob schaltende Polymerschicht so modifiziert, dass die Kapillarkondensation im hydrophoben Zustand bei einem relativen Dampfdruck möglichst knapp über 1 erfolgt, d.h. nur schwach hydrophobes Verhalten zeigt, und die Kapillarkondensation im hydrophilen Zustand schon bei möglichst niedrigem relativem Dampfdruck erfolgt. Bleibt der Temperaturhub trotz Modifizierung der Polymerschicht zu klein, kann eine Kaskadierung mehrerer Adsorber mit Materialien unterschiedlicher Schalt-Temperaturen der Polymeren einen höheren Temperaturhub des Gesamtsystems ermöglichen. Die Adsorptionswärme des Adsorbens mit der niedrigen Schalt-Temperatur des Polymers wird dann dem Verdampfer für einen Adsorber mit höherer Schalt-Temperatur des Polymers zugeführt, wodurch der nutzbare Temperaturhub gesteigert wird.

## Patentansprüche

1. Adsorbens enthaltend eine poröse Trägerstruktur, wobei die Porenwände mit mindestens einem Polymer, Oligomer und/oder deren Blends beschichtet sind und diese Beschichtung ein temperaturinduziertes reversibles Umschalten der Benetzungseigenschaften von hydrophilem zu hydrophobem Verhalten zeigt, wobei die Hydrophobizität bei steigender Temperatur zunimmt.

2. Adsorbens nach Anspruch 1,
**dadurch gekennzeichnet, dass** die Beschichtung mindestens ein LCST -Polymer enthält.

3. Adsorbens nach dem vorhergehenden Anspruch,
**dadurch gekennzeichnet, dass** das LCST-Polymer ausgewählt ist aus der Gruppe bestehend aus N-substituierten Poly(meth)acrylamiden, Poly(N-Vinylcaprolactam), Polyalkylenoxiden, Polyalkylenglykolen, Poly(vinylalkylether), Hydroxyalkylcellulosen sowie deren Copolymeren oder Blends.

4. Adsorbens nach einem der vorhergehenden Ansprüche,
**dadurch gekennzeichnet, dass** die Beschichtung mindestens ein denaturierbares Biopolymer enthält.

5. Adsorbens nach dem vorhergehenden Anspruch,
**dadurch gekennzeichnet, dass** das Biopolymer ausgewählt ist aus der Gruppe der Peptide.

6. Adsorbens nach einem der vorhergehenden Ansprüche,
**dadurch gekennzeichnet, dass** die Hydrophobizität stetig mit der Temperaturerhöhung steigt.

7. Adsorbens nach einem der Ansprüche 1 bis 5,
**dadurch gekennzeichnet, dass** die Hydrophobizität in einem engen Temperaturbereich sprunghaft ansteigt.

8. Adsorbens nach einem der vorhergehenden Ansprüche,
**dadurch gekennzeichnet, dass** die Beschichtung eine Schichtdicke im Bereich von 15·10⁻¹⁰ m (15 Å) bis 200·10⁻¹⁰ m (200 Å) aufweist.

9. Adsorbens nach einem der vorhergehenden Ansprüche,
**dadurch gekennzeichnet, dass** die Trägerstruktur ausgewählt ist aus der Gruppe bestehend aus porösen Silikagläsern und porösen Kohlenstoffen.

10. Adsorbens nach dem vorhergehenden Anspruch,
**dadurch gekennzeichnet, dass** die Trägerstruktur Aktivkohle ist.

11. Adsorbens nach einem der vorhergehenden Ansprüche,
**dadurch gekennzeichnet, dass** die Trägerstruktur eine mittlere Porengröße im Bereich von 50·10⁻¹⁰ m (50 Å) bis 2000·10⁻¹⁰ m (2000 Å) aufweist.

12. Adsorbens nach einem der vorhergehenden Ansprüche,
**dadurch gekennzeichnet, dass** die Trägerstruktur eine Porosität im Bereich von 0,2 bis 0,6 cm³/g aufweist.

13. Adsorbens nach einem der vorhergehenden Ansprüche,
**dadurch gekennzeichnet, dass** die Trägerstruktur eine spezifische Oberfläche von mindestens 100 bis 1000 m²/g aufweist.

14. Verwendung des Adsorbens nach einem der vorhergehenden Ansprüche in Wärmepumpen und Wärmespeichern.

15. Verwendung nach dem vorhergehenden Anspruch zur Adsorption von Wasser.

16. Verwendung nach einem der Ansprüche 12 oder 13, **dadurch gekennzeichnet, dass** durch Funktionalisierung des mindestens einen Polymers die Temperatur für das Umschalten und/oder der Kontaktwinkel eingestellt wird.

17. Verwendung des Adsorbens nach einem der vorhergehenden Ansprüche in Kältemaschinen.

18. Verwendung des Adsorbens nach Anspruch 17,
**dadurch gekennzeichnet, dass** die Kältemaschinen ohne Kondensator arbeiten.

19. Verwendung des Adsorbens nach dem vorhergehenden Anspruch, **dadurch gekennzeichnet, dass** das Adsorbens in einen Wärmeübertrager eingebracht wird, dass der desorbierte Dampf innerhalb der Wärmeübertragereinheit an der Oberfläche des Adsorbens kondensieren kann und das Kondensat ablaufen und einem Kondensatrücklauf zum Verdampfer hin zugeführt werden kann.

## Claims

1. Adsorber comprising a porous support structure, wherein the pore walls are coated with at least one polymer, oligomer and/or blends thereof and this coating displays a temperature-induced changing over of the wetting properties from hydrophilic to hydrophobic behaviour, the hydrophobicity increasing with increasing temperature.

2. Adsorber according to claim 1,
**characterized in that** the coating comprises at least one LCST polymer.

3. Adsorber according to the preceding claim,
**characterized in that** the LCST polymer is chosen from the group consisting of N-substituted poly(meth)acrylamides, poly(N-vinylcaprolactam), polyalkylene oxides, polyalkylene glycols, poly(vinyl alkyl ethers), hydroxyalkylcelluloses and copolymers or blends thereof.

4. Adsorber according to one of the preceding claims,
**characterized in that** the coating comprises at least one denaturable biopolymer.

5. Adsorber according to the preceding claim,
**characterized in that** the biopolymer is chosen from the group of peptides.

6. Adsorber according to one of the preceding claims,
**characterized in that** the hydrophobicity increases continually with the increase in temperature.

7. Adsorber according to one of claims 1 to 5,
**characterized in that** the hydrophobicity increases suddenly in a narrow temperature range.

8. Adsorber according to one of the preceding claims,
**characterized in that** the coating has a layer thickness in the range of from 15 · 10⁻¹⁰ m (15 Å) to 200 · 10⁻¹⁰ m (200 Å).

9. Adsorber according to one of the preceding claims,
**characterized in that** the support structure is chosen from the group consisting of porous silica glasses and porous carbons.

10. Adsorber according to the preceding claim,
**characterized in that** the support structure is active charcoal.

11. Adsorber according to one of the preceding claims,
**characterized in that** the support structure has an average pore size in the range of from 50 · 10⁻¹⁰ m (50 Å) to 2,000 · 10⁻¹⁰ m (2,000 Å).

12. Adsorber according to one of the preceding claims,
**characterized in that** the support structure has a porosity in the range of from 0.2 to 0.6 cm³/g.

13. Adsorber according to one of the preceding claims,
**characterized in that** the support structure has a specific surface area of from at least 100 to 1,000 m²/g.

14. Use of the adsorber according to one of the preceding claims in heat pumps and heat accumulators.

15. Use according to the preceding claim for adsorption of water.

16. Use according to one of claims 12 or 13
**characterized in that** the temperature for the changing over and/or the contact angle is established by functionalization of the at least one polymer.

17. Use of the adsorber according to one of the preceding claims in refrigerators.

18. Use of the adsorber according to claim 17,
**characterized in that** the refrigerators operate without a condenser.

19. Use of the adsorber according to the preceding claim,
**characterized in that** the adsorber is introduced into a heat exchanger, and **in that** the desorbed vapour can condense on the surface of the adsorber within the heat exchanger unit and the condensate can run off and can be fed to a condensate reflux to the evaporator.

## Revendications

1. Adsorbant contenant une structure support poreuse dont les parois des pores sont revêtues d'au moins un polymère ou oligomère et/ou de mélanges les contenant et ledit revêtement présente un changement d'état, induit par la température et réversible, des propriétés de mouillage d'un comportement hydrophile à un comportement hydrophobe, l'hydrophobicité augmentant à mesure que la température s'élève.

2. Adsorbant selon la revendication 1, **caractérisé en ce que** le revêtement contient au moins un polymère LCST.

3. Adsorbant selon la revendication précédente, **caractérisé en ce que** le polymère LCST est choisi dans le groupe constitué par des poly(méth)acrylamides N-substitués, le poly-N-vinylcaprolactame, des polyoxydes d'alkylènes, des polyalkylène glycols, des polyéthers de vinylalkyles, des hydroxyalkylcelluloses, ainsi que leurs copolymères ou mélanges.

4. Adsorbant selon l'une des revendications précédentes, **caractérisé en ce que** le revêtement contient au moins un biopolymère dénaturable.

5. Adsorbant selon la revendication précédente, **caractérisé en ce que** le biopolymère est choisi dans le groupe des peptides.

6. Adsorbant selon l'une des revendications précédentes, **caractérisé en ce que** l'hydrophobicité augmente continuellement à mesure que la température s'élève.

7. Adsorbant selon l'une des revendications 1 à 5, **caractérisé en ce que** l'hydrophobicité augmente par bonds dans une plage de température étroite.

8. Adsorbant selon l'une des revendications précédentes, **caractérisé en ce que** le revêtement présente une épaisseur de couche dans la plage de 15 · 10⁻¹⁰ m (15 Å) à 200 · 10⁻¹⁰ m (200 Å).

9. Adsorbant selon l'une des revendications précédentes, **caractérisé en ce que** la structure support est choisie dans le groupe constitué par des verres de silice poreux et des carbones poreux.

10. Adsorbant selon la revendication précédente, **caractérisé en ce que** la structure support est du charbon actif.

11. Adsorbant selon l'une des revendications précédentes, **caractérisé en ce que** la structure support présente une taille de pore moyenne dans la plage de 50·10⁻¹⁰ m (50 Å) à 2000·10⁻¹⁰ m (2000 Å).

12. Adsorbant selon l'une des revendications précédentes, **caractérisé en ce que** la structure support présente une porosité dans la plage de 0,2 à 0,6 cm³/g.

13. Adsorbant selon l'une des revendications précédentes, **caractérisé en ce que** la structure support présente une aire de surface spécifique d'au moins 100 à 1000 m²/g.

14. Utilisation de l'adsorbant selon l'une des revendications précédentes dans des pompes à chaleur et des accumulateurs de chaleur.

15. Utilisation selon la revendication précédente pour l'adsorption d'eau.

16. Utilisation selon l'une des revendications 12 ou 13, **caractérisée en ce que** la température de changement d'état et/ou l'angle de contact sont ajustés par fonctionnalisation dudit au moins un polymère.

17. Utilisation de l'adsorbant selon l'une des revendications précédentes dans des machines frigorifiques.

18. Utilisation de l'adsorbant selon la revendication 17, **caractérisé en ce que** les machines frigorifiques travaillent sans condenseur.

19. Utilisation de l'adsorbant selon la revendication précédente, **caractérisée en ce que** l'adsorbant est introduit dans un caloporteur, **en ce que** la vapeur désorbée peut condenser à l'intérieur du dispositif caloporteur sur la surface de l'adsorbant et **en ce que** le condensat peut s'écouler et être envoyé dans un circuit de retour du condensat vers l'évaporateur.
